# EUROPEAN PATENT APPLICATION

(11) **EP 1 296 131 A2**
(43) Date of publication of application: **26.03.2003**
(21) Application number: 02256165.8
(22) Date of filing: 05.09.2002
(51) Int. Cl.: G01N 21/954

(54) **Video inspection apparatus**

(30) Priority: 19.09.2001 GB 0122592
(71) Applicant: Pearpoint Limited, Bordon, Hampshire GU35 9QE (GB)
(72) Inventor: Brunton, Adrian Bruce, Hayling Island, Hampshire PO11 ONY (GB)
(74) Representative: Pluckrose, Anthony William

(57) **Abstract**

Video inspection apparatus (10) for inspecting a pipeline. The apparatus comprises first (25) and second (29) cables windable respectively in first and second reels on a drum (13) rotatably mounted on a support (12,30). A first camera (15) is connected at one end of the first cable (25), A second camera (16) is connected at one end of the second cable (29). The first (25) and second (29) cables can each be manually unwound respectively from the first and second reels thereof in order to advance the first (15) or the second (16) cameras along the inspected pipeline. The first (25) and second (29) cables are connectable to a video display (11) so that images recorded by the first (15) and second (16) cameras can be displayed by the video display (11). The first (25) and second (29) cables are connectable to a power source (14) so that electrical power can be relayed to the first (15) and second (16) cameras.

## Description

The present invention relates to video inspection apparatus and in particular to video inspection apparatus for use in inspecting the interior of pipework.

It is known to mount a camera at the end of a stiff but flexible cable and then to manually insert the camera in a pipe and push the camera down the pipe using the stiff flexible cable to push the camera along the pipe. The cable must be stiff enough to allow the camera to be pushed along the pipe, yet flexible enough to allow the camera to negotiate bends. Typically the cable has been dispensed from a reel rotatably mounted on a stand or frame.

Passing through the cable are wires providing an electrical supply to the camera at the end of the cable and also feeding back the video signals obtained by the camera. Typically lighting is provided along with the camera so that the interior of the pipe can be illuminated during inspection. The power supply for the lighting also passes along the cable.

To date inspection apparatus such as described above has been used in inspection of large scale pipes such as sewers. Usually it is transported to site by a van and power for the apparatus is provided by batteries of the transporting vehicle, or by a portable generator or from a mains electricity supply. A cable supplying power will be run e.g. from the vehicle and will engage in a socket provided on the inspection apparatus, which will itself be manually portable to be located near an entry point for the sewer pipe to be inspected. A video screen showing the image recorded by the camera has in the past been mounted on the stand supporting the cable reel, but at other times the video display has been located inside the transporting vehicle and cable run from the cable reel to the video screen apparatus inside the vehicle.

The present invention provides video inspection apparatus for inspecting a pipeline comprising;
first and second cables windable respectively in first and second reels on drum means rotatably mounted on support means; and
first camera means connected at one end of the first cable;
second camera means connected at one end of the second cable; wherein:
the first and second cables can each be manually unwound respectively from the first and second reels thereof in order to advance the first or the second camera means along the inspected pipeline;
the first and second cables are connectable to video display means so that images recorded by the first and second camera means can be relayed to the video display means for display thereby; and
the first and second cables are connectable to a power source so that electrical power can be relayed to the first and second camera means.

In the past the video inspection apparatus of the prior art comprised a single reel of cable with a single camera mounted at the end. In order to allow for inspection of different diameter pipes at least two different reels of cable would have to be transported routinely by those involved in the inspection. Whilst for large diameter pipes a certain diameter of camera is advantageously used to give a good image quality, this diameter of camera would not be usable in small diameter pipes, for which it is necessary to use a smaller diameter camera. The cameras have lighting apparatus associated therewith, usually in the form of light emitting diodes. The greater the diameter of pipe, the greater the need for illumination and the more LEDs are required, thus the greater size of the camera/lighting apparatus as a whole. Smaller diameter camera/lighting apparatus could not be used in a large diameter pipe because of its limited image quality and lighting capability. The present invention provides a solution to this problem in that it provides in a single transportable unit two different reels of cable with two different diameter cameras. The operator can take just the single unit to any inspection and they select at the site which camera is the most appropriate. The two cameras share a single video screen and a selector switch will allow the operator to choose which camera is connected to the video screen.

The present invention could also provide apparatus in which the first and second camera means are identical, but the first and second cables connected thereto differ. For instance, one cable could be short and stiff to allow for the pushing of one camera around tight corners, whilst the other cable could be long and more flexible to allow inspection of a long length of straight pipe or a length with gentle curves. Of course, the first and second camera means could be different to each other and the first and second cables different to each other.

Preferred embodiments of inspection apparatus according to the present invention will now be described with reference to the accompanying drawings in which:
Figure 1 is a first side elevation of video inspection apparatus according to the invention;
Figure 2 is a second side elevation of video inspection apparatus shown in Figure 1;
Figure 3 is a cross-section through the embodiment shown in Figures 1 and 2, taken along the line A-A' of Figure 2 in the direction of the arrow;
Figure 4 is a view of the front of the video display unit of video inspection apparatus, the display unit having been shown in side view in Figures 1 and 2 and in rear view in Figure 3.

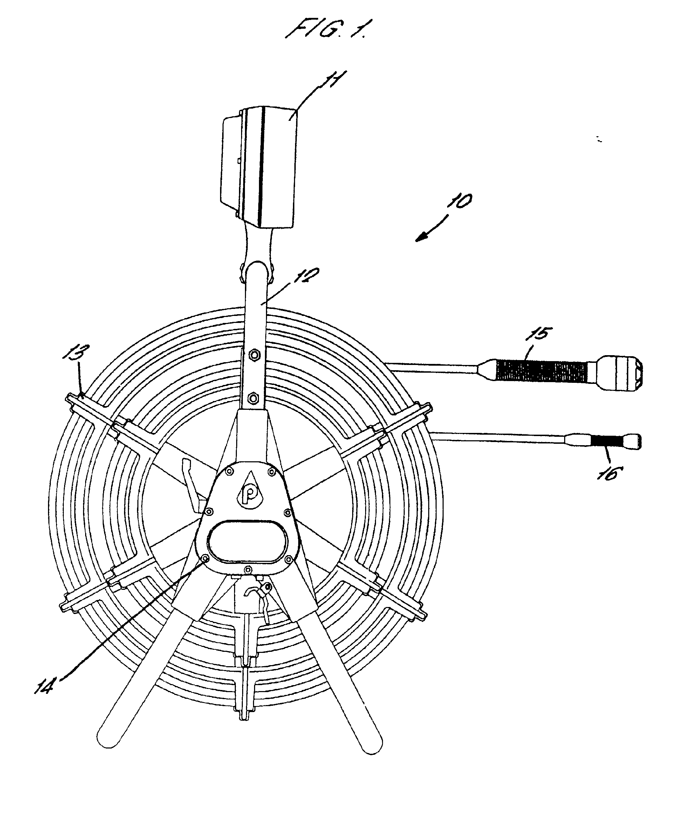

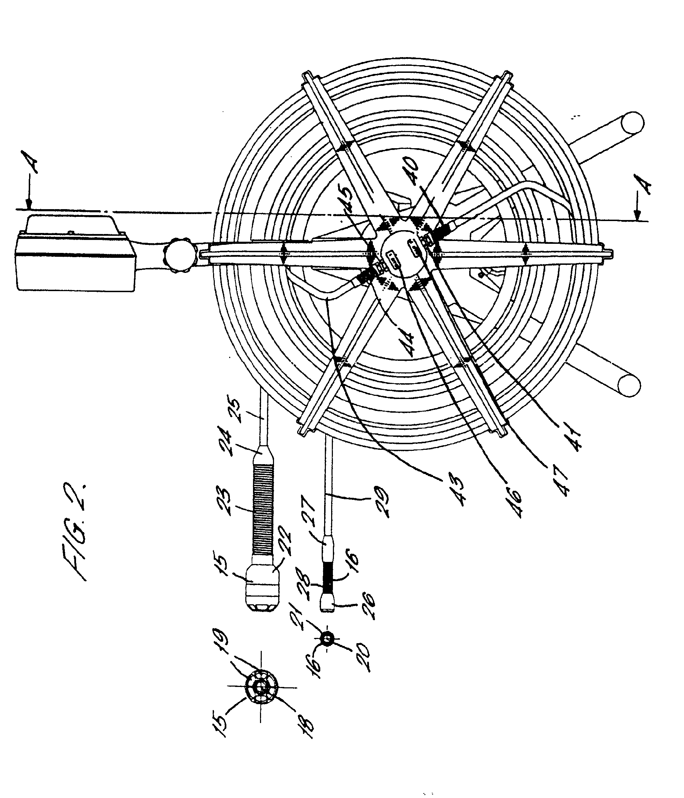

Turning to Figure 1 there can be seen in the figure video inspection apparatus 10 comprising a video display unit 11 mounted on a frame 12 which carries a rotatable reel 13 mounted to rotate about a spindle extending from the frame 12. In the Figure there can also be seen a battery pack 14 and two different cameras 15 and 16. The camera 15 has a diameter of 50mm and the camera 16 has a diameter of 25mm. In Figure 2 at the left hand side there can be seen the front of the two cameras 15 and 16. At the front of the camera 15 there is a lens 18 for a camera typically comprising a CMOS sensor and this is surrounded by a plurality of LEDs 19 which provide light to illuminate the interior of a pipe being inspected by the camera. In a similar way the camera 16 has a lens 20 and the camera is surrounded by a plurality of LEDs 21, which again provide illumination in the interior of the pipe being inspected.

The camera 15 has a head 22 which comprises the CMOS sensor and its supporting electronics and also the illuminating LEDs. Immediately behind the head 22 there is a section 23 comprising a coiled spring surrounding the wires which provide the head 22 with power and which relay video signals from the head 22. The coiled spring 23 allows the head 22 to move around corners in the pipework. The coiled spring 23 extends between the head 22 and a socket section 24 which allows connection of the camera apparatus and associated lighting to a cable 25.

In a similar way the camera apparatus 16 comprises a head 26 which houses a CMOS sensor, illuminating LEDs and their supporting electronics. This head is connected to a socket section 27 by a coiled spring 28 which allows the camera head 26 to flex and move around corners within the pipework. The socket 27 connects the camera to a cable 29.

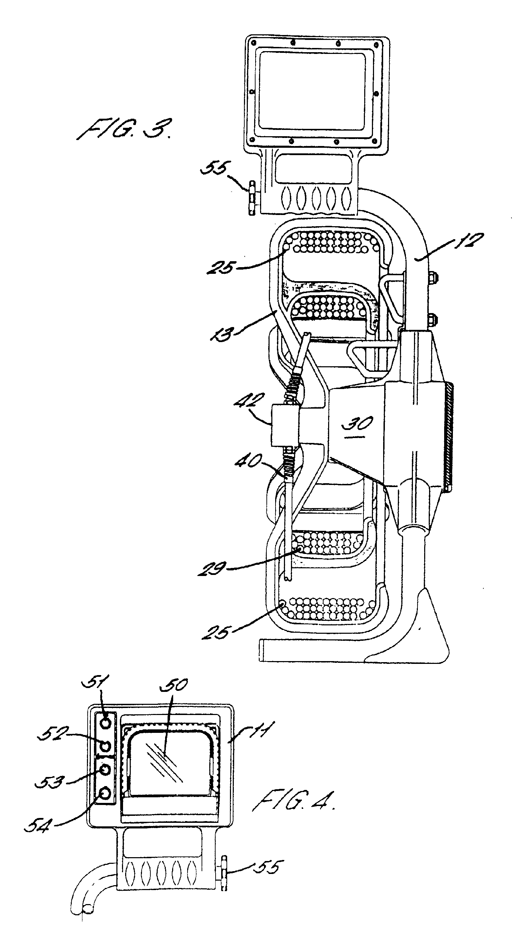

Turning now to Figure 3 it can be seen that the cable 25 is wound in a reel on the drum 13 which is pivotally mounted on a hub 30 of the supporting frame 12. The drum 13 is rotatable about the hub 30.

The cable 29 is wound in a reel also on the drum 13. The reel of cable 25 and the reel of cable 29 are both concentric, having coincident axes along the axis of the hub 30. The reel of cable 25 is wound to have a diameter greater than the diameter of the wound reel of cable 29.

In Figures 2 and 3 can be seen that the cable 25 terminates at the end opposite to the end connected to the camera at a plug 40 which is attached to a socket 41 mounted on the hub 42 of the rotatable drum 13. In a similar way the cable 25 has an end 43 which has a plug 44 engageable with a socket 45 mounted on the hub 42 of the cable drum 13. On the hub 42 there can be seen in Figure 2 two switches 46 and 47. These switches allow the operator to select between the two cameras 15 and 16. Operation of switch 46 allows selection of camera 16 and operation of switch 47 allows selection of camera 15. The switches 46 and 47 switch the cameras 15 and 16 on and off by controlling the power supply to the cameras. The switches 46 and 47 could be replaced by a single three-way switch.

Cables (not shown) will extend through the stand 12 to connect the sockets 45 and 41 with the video display apparatus 11, best seen in Figure 4. In this figure there can be seen that the video display apparatus comprises an LCD screen 50 and some controls 51, 52, 53 and 54 which allow control of the display, e.g. brightness, contrast, colour and positioning of the image on the screen. The video display apparatus 11 can be pivoted about the top of the stand 12 and then fixed in place by using the clamp 55.

The video inspection apparatus 10 is completely self-contained in that it contains batteries needed to power the cameras 15 and 16 and the video display apparatus 11. The image obtained by either camera 15 or camera 16 is displayed by the video display unit 11 which is part of the apparatus. The operator can select for use either a small diameter camera 16 or a larger diameter camera 15. It is envisaged that the batteries used by the apparatus will be rechargeable. Typically once charged the battery power pack would provide 3 to 4 hours of power supply and it is envisaged that this would be sufficient to last through a day of use by an operative, with the pack then being recharged overnight. Additionally or alternatively the apparatus could be supplied with several battery packs easily interchangeable.

It is preferred that the drum 13 is associated with a self retracting mechanism. When the cable 25 or cable 29 is pulled out from the reel then a ratchet mechanism operates so that the cable remains at its drawn out length. Once the operator has finished inspection then he will release the ratchet mechanism in a known manner and the drum 13 will rotate under the action of potential energy stored in a spring and will wind the cable 25 or 29 back onto the drum. Alternatively the cables 25 and 29 could be manually unwound from, and then manually wound back on to the reels.

The overall apparatus will be of a size and weight suitable for carrying by a single operator to a point of inspection.

Each cable 25, 29 is preferably a cable comprising a fibreglass core over which a plastic jacket is extruded, the fibreglass rod providing the necessary rigidity and the jacket providing protection for the rod and preventing the rod from snapping.

To use the apparatus described above an operator will transport the apparatus to an inspection site. The operator will then select whether it is appropriate to use the small scale camera 16 or the larger scale camera 15. Once a selection has been made then the operator will pull the relevant cable 25 or 29 from the rotatable drum and feed the camera 15 or 16 along pipework to be inspected, pushing the camera 15 or 16 along manually using the relatively stiff cable 25 or 29. The operator will use the switches 46 and 47 to supply power to the chosen camera and the associated lighting apparatus. The image of the inspected pipe will then appear on the screen 50 and the operator will be able to view the interior of the pipe being inspected. It is possible that the video display apparatus 11 could incorporate some way of recording the video sequence captured by the camera, for subsequent replay.

Whilst above the drum 13 is shown mounted with an axis of rotation horizontal, it is possible that the apparatus could be constructed in such a way that the drum 13 rotates about a vertical axis. It is also possible that the video display apparatus 11 rather than being mounted at the top of the stand 12 is mounted on the hub of the stand. The video display apparatus could be separate and independent and linked by cable to the stand or frame.

Whilst it is advantageous for reasons of portability to have a battery pack integral to the unit, this is not necessary and the unit could dispense with an integral power source and be connectable to an existing power source, e.g. a generator or to mains supply.

Whilst above the apparatus 10 has been described with two cameras 15 and 16 of different diameters, in an alternative arrangement the cameras would be identical, but attached to cables which have different characteristics. One cable could be short and stiff to allow access around tight bends. The other cable could be longer and less stiff to allow inspection of long lengths of straight pipe or pipes with gentle corners. Of course, both the cameras could be different to each other and the cables different to each other.

## Claims

1. Video inspection apparatus (10) for inspecting a pipeline comprising;
first (25) and second (29) cables windable respectively in first and second reels on drum means (13) rotatably mounted on support means (12,30); and
first camera means (15) connected at one end of the first cable (25);
second camera means (16) connected at one end of the second cable (29); wherein:
the first (25) and second (29) cables can each be manually unwound respectively from the first and second reels thereof in order to advance the first (15) or the second (16) camera means along the inspected pipeline;
the first (25) and second (29) cables are connectable to video display means (11) so that images recorded by the first (15) and second (16) camera means can be relayed to the video display means (11) for display thereby; and
the first (25) and second (29) cables are connectable to a power source (14) so that electrical power can be relayed to the first (15) and second (16)camera means.

2. Video inspection apparatus as claimed in claim 1 wherein the first camera means (15)is of a first size and is suitable for use in pipelines of a first range of cross-sectional areas and the second camera means (16) is of a second smaller size and is suitable for use in pipelines of a second range of smaller cross-sectional areas.

3. Video inspection apparatus as claimed in claim 2 wherein the first (15) and second (16) camera means are each generally cylindrical in overall shape and configuration and the first camera means (15) has an external diameter larger than the external diameter of the second camera means (16).

4. Video inspection apparatus as claimed in any one of claims 1 to 3 wherein one of the cables (25, 29) is of a first stiffness and the other cable (25 29) is of a second greater stiffness.

5. Video inspection apparatus as claimed in any one of claims 1 to 4 wherein one of the cables(25,29) is of a first length and the other cable (25,29) is of a second longer length.

6. Video inspection apparatus as claimed in any of claims 1 to 5 wherein the support means (12, 30) comprises a stand (12) and video display means (11) is mounted on the stand (12) and transportable therewith.

7. Video inspection apparatus as claimed in claim 6 wherein both the first (15) and second (16) camera means are connected to the same video display means (11), the video display means (11) has a single screen (50) and switching means (46,47) enables the operator to selectively connect the video display means (11) either to the first (15) camera means to display on the screen (50) images recorded by the first camera means (15) or to the second camera means (16) to display on the screen (50)images recorded by the second camera means (16).

8. Video inspection apparatus as claimed in claim 6 or claim 7 wherein the power source (14) is an electric battery (14) mounted on the support means (12,30) and transportable therewith.

9. Video inspection apparatus as claimed in claim 8 wherein both the first (15) and second (16) camera means are connected to the same electric battery (14) and switching means (46, 47) is provided to enable the operator to selectively connect the electric battery (14) to either the first camera means (15) or the second camera means (16) and thereby select which camera means (15,16) is operational.

10. Video inspection apparatus as claimed in claim 8 or claim 9 wherein the first (25) and second cables(29), the first (15) and second (16) camera means, the support means(12, 30), the electric battery (14) and the video display means (11) together form a self-contained unit (10) which can be carried by a single human operator to an inspection site and used without connection to any ancillary apparatus.

11. Video inspection apparatus as claimed in claim 10 wherein the electrical battery (14) is detachably mounted on the support means(12,30).

12. Video inspection apparatus as claimed in claim 10 wherein the electric battery (14) is a rechargeable battery and the apparatus has connecting means to allow the rechargeable battery to be connected to an external power supply to be recharged.

13. Video inspection apparatus as claimed in any of claims 1 to 12 wherein each cable (25,29) has associated therewith a cable retraction mechanism comprising a ratchet means and a spring means and when each cable (25, 29) is manually drawn out from the reel thereof then potential energy is stored in the spring means, which potential energy is subsequently used by the spring means to wind the cable (25, 29) back into the reel, the ratchet means acting to prevent retraction of each cable (25, 29) until the rachet means is released by the operator.

14. Video inspection apparatus as claimed in any one of claims 1 to 13 wherein each cable (25, 29) comprises a fibreglass core over which a plastic jacket is extruded.

15. Video inspection apparatus as claimed in any one of the claims 1 to 14 wherein each camera means (15,16) comprises:
a sensor encased in a housing (22, 26);
a connector (24, 27) for connecting the camera means to the cable (25 29); and
a helical spring (23, 28) joining the housing (22, 26) and the connector 924, 27).

16. Video inspection apparatus as claimed in any one of the claims 1 to 15 wherein each camera means (15, 16) comprises illumination means (19) for illuminating the interior of the inspected pipeline.

17. Video inspection apparatus as claimed in any of the claims 1 to 16 wherein the support means (12, 30) comprises a stand (12) and the first and second reels are co-axially mounted on the drum means (13) to be rotatable about a spindle of the stand (12), the first reel being larger in diameter than the second reel and the first reel being mounted surrounding the second reel.

18. Video inspection apparatus as claimed in claim 17 wherein the spindle in use extends generally horizontally.

19. A method of inspecting an interior of a pipeline using video inspection apparatus as claimed in claim 10 or any claim dependent on claim 10, the method comprising the steps of:
a human operator manually transporting the inspection apparatus (10) to an inspection site;
the human operator selecting between the first (15) and second (16) camera means by using the switching means (46, 47) to connect the selected camera means (15, 16) to the electric battery (14) and the video display means (11);
the human operator inserting the selected camera means (15, 16) into the pipeline to be inspected and then unwinding the cable (25, 29) attached to the selected camera means (15, 16) from the relevant reel thereof and using the unwound cable (25, 29) to push the selected camera means (15, 16) along the pipeline; and
the human operator viewing on the video display means (11) an image of the interior of the inspected pipeline as recorded by the selected camera means whilst which the selected camera means (15, 16) is advanced down the pipeline.
